# EUROPÄISCHE PATENTSCHRIFT

(11) **EP 4 543 721 B1**
(45) Veröffentlichungstag und Bekanntmachung des Hinweises auf die Patenterteilung: **03.06.2026**
(21) Anmeldenummer: 23721637.9
(22) Anmeldetag: 21.04.2023
(51) Int. Cl.: B60T 13/58, B60T 17/22, B60L 7/26, B60T 8/172

(54) **VERFAHREN ZUM REINIGEN EINER BREMSSCHEIBE EINES HYBRID- ODER VOLLELEKTRISCHEN FAHRZEUGS UND HYBRID- ODER VOLLELEKTRISCHES FAHRZEUG, DAS NACH DERARTIGEN VERFAHREN BETREIBBAR IST**
METHOD FOR CLEANING A BRAKE DISC OF A HYBRID OR FULLY ELECTRIC VEHICLE AND HYBRID OR FULLY ELECTRIC VEHICLE THAT CAN BE OPERATED ACCORDING TO SUCH A METHOD
PROCÉDÉ DE NETTOYAGE D'UN DISQUE DE FREIN D'UN VÉHICULE HYBRIDE OU ENTIÈREMENT ÉLECTRIQUE ET VÉHICULE HYBRIDE OU ENTIÈREMENT ÉLECTRIQUE POUVANT FONCTIONNER SELON UN TEL PROCÉDÉ

(30) Priorität: 21.06.2022 DE 102022206193
(43) Veröffentlichungstag der Anmeldung: 30.04.2025
(73) Patentinhaber: Stellantis Auto SAS, 78300 Poissy (FR)
(72) Erfinder: EHRLICH, Dirk, 65428 Rüsselsheim am Main (DE); BAUSCH, Olaf, 65428 Rüsselsheim am Main (DE)
(74) Vertreter: BCIP
(86) Internationale Anmeldenummer: PCT/EP2023/060406
(87) Internationale Veröffentlichungsnummer: WO 2023/247087

(56) Entgegenhaltungen:
- EP-A1- 1 369 326
- EP-A1- 1 369 326
- DE-A1- 102016 217 680
- DE-A1- 102016 217 680
- DE-A1- 102017 205 810
- DE-A1- 102017 205 810
- DE-A1- 19 947 903
- DE-A1- 19 947 903
- US-A1- 2011 149 283
- US-A1- 2011 149 283

## Beschreibung

Die Erfindung betrifft ein Verfahren zum Reinigen einer Bremsscheibe eines Hybrid- oder vollelektrischen Fahrzeugs sowie ein Hybrid- oder vollelektrisches Fahrzeug, das nach derartigen Verfahren betreibbar ist.

Bei Hybrid- oder vollelektrischen Fahrzeugen wird versucht, Energieverluste so gering wie möglich zu halten. Zum Bremsen wird daher die die elektrische Maschine als Generator in einem Rekuperationsbetrieb betrieben, bei der Bewegungsenergie in elektrische Energie umgewandelt wird. Das Bremsen des Fahrzeugs erfolgt daher überwiegend im Rekuperationsbetrieb. Die Reibungsbremsen werden hierdurch bedingt eher selten verwendet. Dieses führt zu einer verstärkten Korrosion der Bremsscheibe was, bei Verwenden der Bremsscheibe, zu unerwünschten Geräuschen beim Bremsen führen kann. Ferner kann bei einem sich durch Korrosion veränderten Reibwert das Fahrverhalten, insbesondere das Bremsverhalten, unvorteilhaft verändern.

Aus dem Stand der Technik sind Verfahren zum Reinigen einer Bremsscheibe bekannt, bei denen in Abhängigkeit eines Algorithmus die Reibungsbremse anstelle der Rekuperation zum Bremsen verwendet wird. Hierbei umfasst der Algorithmus bestimmte Zeitintervalle, nach denen die Reibungsbremse der Rekuperation vorgezogen wird, um die Bremsscheibe durch mechanisches Abreiben der Korrosion zu reinigen.

So ist aus der DE 10 2017 205 810 A1 ein Verfahren zum Reinigen einer korrodierten Bremsscheibe eines Fahrzeugs mit einem rekuperationsbasierten Bremssystem und einem Reibbremssystem bekannt, bei dem ein Korrosionskennwert für eine Bremsscheibe ermittelt und mit einem Schwellwert verglichen wird. Der Korrosionskennwert wird in Abhängigkeit eines Bremsdruckverlaufs einer jeweiligen Reibbremse und basierend auf einer Korrosionswahrscheinlichkeit ermittelt.

Ferner beschreibt die DE 10 2016 217 680 A1 ein Verfahren zum Reinigen einer korrodierten Bremsscheibe, wobei ein Reinigungskriterium über eine Vorausschauzeitspanne durch Abschätzung ermittelt wird, wobei das Reinigungskriterium basierend auf einer eingebrachte Energiemenge während Vorausschauzeitspanne im Verglich zu einem Schwellwert abgeschätzt wird.

Es hat sich als nachteilig herausgestellt, dass der tatsächliche Korrosionsgrad der Bremsscheibe nicht erfasst wird. Dieser kann in Abhängigkeit der Witterungsbedingungen und der klimatischen Verhältnisse vom hinterlegten Algorithmus des Reinigungsprogramms abweichen. Hierdurch können Bremsscheibe und die Bremsbeläge schneller verschleißen, da solchenfalls nicht ausgeschlossen werden kann, dass die Korrosion bis zum Reinigen gemäß Algorithmus so massiv in die Bremsscheibe eindringt, dass die Korrosion nicht mehr vom Bremsbelag "weggeputzt" werden kann, was zu einem notwendigen Austausch von Bremsscheibe und Bremsbelag führen kann.

Eine Aufgabe eines Ausführungsbeispiels der Erfindung ist, ein Verfahren zum Reinigen einer Bremsscheibe eines Hybrid- oder vollelektrischen Fahrzeugs sowie ein Hybrid- oder vollelektrisches Fahrzeug, das nach einem derartigen Verfahren betreibbar ist, vorzuschlagen, das verbessert an einem tatsächlichen Bedarf einer Reinigung der Bremsscheibe angepasst ist.

Diese Aufgabe wird gelöst durch ein Verfahren zum Reinigen einer Bremsscheibe eines Hybrid- oder vollelektrischen Fahrzeugs mit den Merkmalen des Anspruchs 1.

Dadurch, dass durch ein der Steuereinheit funktional zusammenwirkendes, optisches Sensormittel eine Korrosion der Bremsfläche erfassbar ist und in der Steuereinheit ein bestimmter Korrosionsgrad hinterlegt ist, kann auf einfache Weise die Oberflächengüte der Bremsfläche der Bremsscheibe erfasst werden. Ab Erreichen oder Überschreiten des bestimmten Korrosionsgrads ist dieses durch das optische Sensormittel optisch erfassbar. Bei Erreichen des bestimmten Korrosionsgrads kann ein Bremsverhalten der Bremsscheibe verändert sein.

Dadurch, dass bei dem Erfassen eines Erreichens oder Überschreitens des in der Steuereinheit hinterlegten bestimmten Korrosionsgrads der Bremsfläche, das Fahrzeug zumindest anteilig im Bremsenbetrieb angesteuert wird, kann bei einem Bremsen des Fahrzeugs gewährleistet werden, dass das Bremsmittel zum Bremsen in Richtung Bremsscheibe bewegt wird und durch den hierdurch erfolgenden Abrieb zwischen Bremsscheibe und Bremsmittel die korrodierte Bremsfläche abgeschliffen wird, mit anderen Worten, gereinigt wird.

Der Bremsenbetrieb dient solchenfalls als Reinigungsbetrieb der Bremsscheibe.

Grundsätzlich ist es denkbar, dass bei Erfassen des Erreichens oder Überschreitens des in der Steuereinheit hinterlegten bestimmten Korrosionsgrads der Bremsfläche, beim Bremsen des Fahrzeugs sowohl die Bremsvorrichtung im Bremsenbetrieb angesteuert wird, als auch die reversible elektrische Maschine im Rekuperationsbetrieb.

Um die Reinigungswirkung zu erhöhen, erweist es sich als vorteilhaft, wenn bei Erfassen des Erreichens oder Überschreitens des bestimmten Korrosionsgrads der Bremsfläche das Fahrzeug beim Bremsen durch die Steuereinheit zum ausschließlichen Betreiben im Bremsenbetrieb angesteuert wird.

Hierdurch sind die zum Bremsen des Fahrzeugs benötigten Bremskräfte, die von der Bremsvorrichtung im Bremsenbetrieb verwendet werden müssen, um das Fahrzeug abzubremsen, erhöht und hierdurch ein Abrieb, bzw. ein Verschleiß der Reibschicht erhöht. Solchenfalls ist die Reinigungswirkung zum Abtragen der korrodierten Bremsfläche weiter verbessert.

Darüber hinaus ist bei einer Weiterbildung des Verfahrens vorgesehen, dass das Fahrzeug an mindestens zwei Rädern jeweils eine Bremsvorrichtung und jeweils mindestens ein der Steuereinheit zugeordnetes optisches Sensormittel umfasst, wobei bei Erfassen des Erreichens oder Überschreitens des bestimmten Korrosionsgrads der Bremsfläche der Bremsscheibe mindestens einer der Bremsvorrichtung alle Bremsvorrichtungen durch die Steuereinheit zum Betreiben im Bremsenbetrieb angesteuert werden oder wobei bei Erfassen des Erreichens oder Überschreitens des bestimmten Korrosionsgrads der Bremsfläche der Bremsscheibe einer der Bremsvorrichtung durch die Steuereinheit nur die mindestens eine Bremsvorrichtung mit erfassten erreichten oder überschrittenen bestimmten Korrosionsgrad zum Betreiben im Bremsenbetrieb angesteuert wird.

Wenn das Fahrzeug mehrere Räder mit jeweils einer, an dem jeweiligen Rad angeordneten Bremsvorrichtung umfasst und lediglich die Bremsvorrichtung im Bremsenbetrieb zum Bremsen durch die Steuereinheit angesteuert werden, bei den in der bestimmte Korrosionsgrad erreicht oder überschritten ist, werden nur die Bremsscheiben der Bremsvorrichtung gereinigt, bei denen eine Reinigung notwendig ist. Hierdurch ist das Verfahren effizient nutzbar und ein unnötiger Verschleiß der Bremsscheiben vermeidbar. Ferner kann hierdurch die Bremsenergie der zum Bremsen nicht verwendeten Bremsvorrichtungen durch einen anteiligen Rekuperationsbetrieb rekuperiert werden.

Bei einer Weiterbildung des Verfahrens erweist es sich als vorteilhaft, wenn bei Erfassen eines Unterschreitens des bestimmten Korrosionsgrads der Bremsfläche das Fahrzeug beim Bremsen durch die Steuereinheit zum zumindest anteiligen Betreiben im Rekuperationsbetrieb oder zum ausschließlichen Betreiben im Rekuperationsbetrieb angesteuert wird.

Solchenfalls kann in den ursprünglichen Betrieb des Fahrzeugs zurückgekehrt werden, wenn die Bremsfläche der Bremsscheiben der Bremsvorrichtung ausreichend gereinigt sind.

Es sind Ausführungsformen des Verfahrens denkbar, bei denen der Korrosionsgrad der Bremsfläche durch das optische Sensormittel durchgehend bei Betrieb des Fahrzeugs, periodisch in Zeitintervallen und/oder beim Bremsen des Fahrzeugs im Bremsenbetrieb erfasst wird.

Wenn der Korrosionsgrad der Bremsfläche durch das optische Sensormittel durchgehend erfasst wird, kann schnell und unmittelbar mit Erfassen des Erreichens oder Überschreitens des bestimmten Korrosionsgrads der Bremsfläche ein Reinigungsprozess eingeleitet werden.

Das Verfahren lässt sich energieeffizienter im Vergleich zu einem durchgehenden Erfassen der Korrosion betreiben, wenn der Korrosionsgrad der Bremsfläche durch das Sensormittel periodisch in Zeitintervallen erfasst wird. Hierbei können die Zeitintervalle derart gewählt werden, dass aufgrund von Erfahrungswerten eine Korrosion keine die Verkehrstüchtigkeit und das Bremsverhalten übermäßig negativ beeinflussende Stärke umfasst.

Besonders effizient lässt sich das Verfahren ausgestalten, wenn der Korrosionsgrad der Bremsfläche durch das Sensormittel beim Bremsen des Fahrzeugs im Bremsenbetrieb erfasst wird.

Das optische Sensormittel kann grundsätzlich ein beliebiges optisches Sensormittel umfassen, durch das Korrosion der Bremsfläche optisch erfassbar ist. Das Sensormittel lässt sich einfach und kostengünstig bereitstellen, wenn das optische Sensormittel mindestens einen Lichtempfänger, wie Kamera, Glanzmessgerät, lichtempfindlichen Widerstand oder Fotodiode, umfasst, wobei das Erfassen des Korrosionsgrads das Erfassen mindestens einer Intensität und/oder einer Wellenlänge der mindestens einen von der Bremsfläche reflektierten elektromagnetischen Welle, insbesondere beim Bremsenbetrieb, umfasst, insbesondere einen Intensitäts- und/oder Wellenlängenbereich, und wobei das Erreichen oder Überschreiten des bestimmten Korrosionsgrads der Bremsfläche ein Erreichen oder Unterschreiten einer bestimmten Intensität und/oder Wellenlänge und/oder eines bestimmten Intensitäts- und/oder Wellenlängenbereichs umfasst.

Wenn durch das optische Sensormittel eine Intensität der von der Bremsfläche reflektierten elektromagnetischen Welle umfasst, ist ein Zunehmen von Korrosion mit einem Abnehmen der Intensität der reflektierten elektromagnetischen Wellen erfassbar. Über die Intensität ist ein Glanzgrad, bzw. ein Reflexionsverhalten der Bremsfläche auf einfache Weise darstellbar. Wenn durch das optische Sensormittel eine Wellenlänge der mindestens einen von der Bremsfläche reflektierten elektromagnetischen Welle erfassbar ist, ist durch das optische Sensormittel eine Farbe erkennbar. Darüber hinaus kann durch das optische Sensormittel bei einer Ausführungsform des Verfahrens sowohl die Intensität als auch die Wellenlänge der von der Bremsfläche reflektierten elektromagnetischen Welle erfasst werden. Hierdurch können Intensitätsminderungen der reflektierten elektromagnetischen Welle aufgrund von Verschmutzungen, die nicht durch die Korrosion herrühren, erkannt werden, wenn diese Verschmutzungen einer anderen Wellenlänge zuordenbar sind als einer für den Korrosionsgrad zugeordneten Wellenlänge.

Grundsätzlich ist es denkbar, dass das optische Sensormittel den Korrosionsgrad der Bremsfläche bei Umgebungslicht erfasst. Um das Verfahren beispielsweise auch bei Nacht anwenden zu können, ist bei einer Weiterbildung des Verfahrens vorgesehen, dass das optische Sensormittel mindestens einen Lichtsender umfasst, wobei das Erfassen des Korrosionsgrads das Erfassen mindestens einer Intensität oder Wellenlänge der mindestens einen von der Bremsfläche reflektierten elektromagnetischen Welle der durch den Lichtsender ausgestrahlten mindestens einen elektromagnetischen Welle umfasst.

Durch den Lichtsender können elektromagnetische Wellen im sichtbaren Spektrum oder im nicht sichtbaren Spektrum ausgesandt werden. Beispielsweise ist es denkbar, dass durch den Lichtsender Infrarotstrahlen ausgesandt werden, die durch den Lichtempfänger empfangbar sind.

Es erweist sich als vorteilhaft, wenn die Steuereinheit mindestens ein Speichermittel umfasst, in dem jeder Intensität oder Wellenlänge und/oder jedem bestimmten Intensitäts- oder Wellenlängenbereich ein Korrosionsgrad der Bremsfläche zuordenbar oder zugeordnet und hinterlegbar oder hinterlegt ist.

Hierdurch ist es ermöglicht, frühzeitig eine zunehmende Korrosion der Bremsscheibe zu erfassen.

Um das Verfahren individuell für unterschiedliche Bremsscheiben anpassen zu können, beispielsweise bei abweichenden Fahrzeugmodellen oder abweichenden Materialien der unterschiedlichen Bremsscheiben, erweist es sich als vorteilhaft, wenn die bestimmte Intensität oder Wellenlänge und/oder der bestimmte Intensitäts- oder Wellenlängenbereich durch Messen einer den bestimmten Korrosionsgrad umfassenden Bremsfläche einer Eich-Bremsscheibe auf einem Prüfstand durch das optische Sensormittel erfasst und in der Steuereinheit hinterlegt wird.

Hierdurch kann das Verfahren für den jeweiligen Typ von Bremsscheibe durch die entsprechend korrespondierende Eich-Bremsscheibe, optimiert werden. Darüber hinaus wird die Aufgabe gelöst durch ein Hybrid- oder vollelektrisches Fahrzeug, das nach einem Verfahren mit zuvor genannten Merkmalen betreibbar ist, mit den Merkmalen des Anspruchs 10.

Bei einer Weiterbildung des Fahrzeugs erweist es sich als vorteilhaft, wenn das optische Sensormittel mindestens einen Lichtempfänger, wie Kamera, Glanzmessgerät, lichtempfindlichen Widerstand oder Fotodiode, umfasst.

Um einem Korrosionsgrad der Bremsfläche auch bei Abwesenheit von Umgebungslicht erfassen zu können, erweist es sich als vorteilhaft, wenn das optische Sensormittel mindestens einen Lichtsender umfasst, durch den elektromagnetischen Wellen in Richtung Bremsfläche der Bremsscheibe ausstrahlbar sind und durch Reflexion an der Bremsfläche der Bremsscheibe durch den Lichtempfänger empfangbar sind.

Das mindestens eine optische Sensormittel kann grundsätzlich beliebig angeordnet sein, sofern es der Funktion nachkommt, von der Bremsfläche der Bremsscheibe reflektiertes Licht, insbesondere reflektierte elektromagnetische Wellen, zu erfassen. Es erweist sich als vorteilhaft, wenn mindestens eines des mindestens einen optischen Sensormittels an einem Halter des Bremsmittels, wie Bremssattel, und/oder an einem Radträger, insbesondere einem Spurhebel des Radträgers, festlegbar oder festgelegt ist.

Darüber hinaus ist bei einer Weiterbildung des Fahrzeugs vorgesehen, dass dieses mindestens zwei Räder, mindestens zwei Sensormittel und mindestens zwei Bremsvorrichtungen umfasst, wobei jedem der mindestens zwei Räder ein Sensormittel und eine Bremsvorrichtung zugeordnet ist.

Darüber hinaus sind Ausführungsformen des Fahrzeugs denkbar, bei denen die mindestens zwei Bremsvorrichtungen gemeinsam und abhängig oder einzeln und unabhängig voneinander durch die Steuereinheit zum Betätigen ansteuerbar sind.

Wenn die mindestens zwei Bremsvorrichtungen gemeinsam und abhängig zum Betätigen ansteuerbar sind, kann das Fahrzeug technisch einfach umgesetzt werden. Wenn die mindestens zwei Bremsvorrichtungen einzeln und unabhängig voneinander durch die Steuereinheit zum Betätigen ansteuerbar sind, können die Bremsscheiben individuell, abhängig vom jeweiligen Korrosionsgrad, gereinigt werden.

Weitere Merkmale, Einzelheiten und Vorteile der Erfindung ergeben sich aus den beigefügten Patentansprüchen, aus der zeichnerischen Darstellung und nachfolgenden Beschreibung zweier bevorzugter Ausführungsformen des Fahrzeugs sowie einer Ausführungsform des Verfahrens.

In der Zeichnung zeigt:
- Figur 1: Eine Draufsicht auf ein erstes Ausführungsbeispiel einer Bremsvorrichtung eines Fahrzeugs;
- Figur 2: Eine Draufsicht auf ein zweites Ausführungsbeispiel einer Bremsvorrichtung eines Fahrzeugs;
- Figur 3: Ein schematisches Ablaufdiagramm eines erfindungsgemäßen Verfahrens.

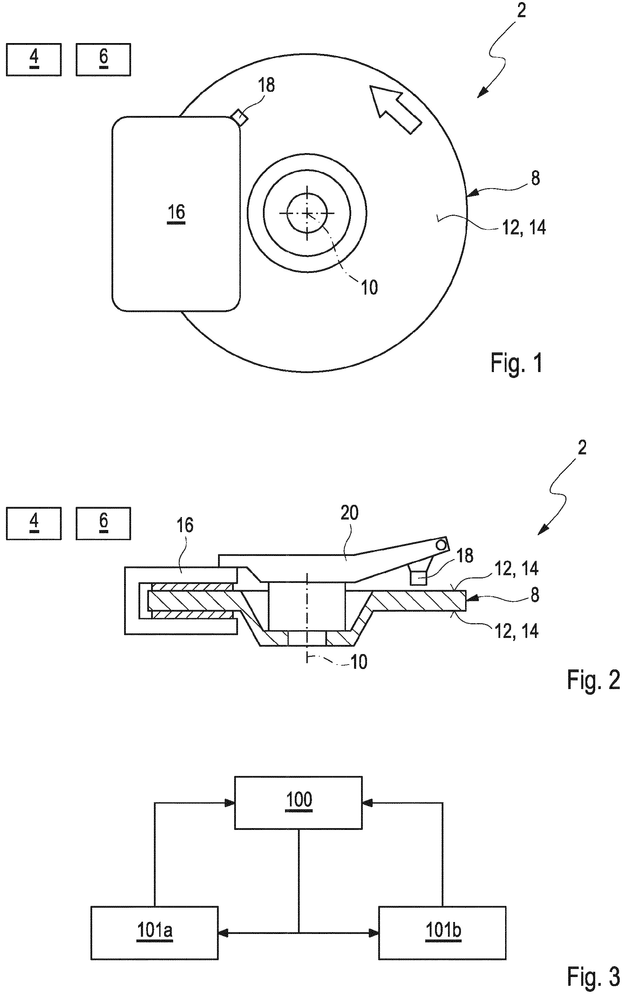

Die Figuren 1 und 2 zeigen jeweils eine Draufsicht auf eine insgesamt mit dem Bezugszeichen 2 versehene Bremsvorrichtung eines Fahrzeugs (in den Figuren nicht explizit dargestellt). Das Fahrzeug umfasst ein Hybrid- oder vollelektrisches Fahrzeug, das eine Steuereinheit 4 umfasst, durch die die mechanische Bremsvorrichtung 2 zum Betreiben in einem Bremsenbetrieb ansteuerbar ist.

Darüber hinaus ist durch die schematisch dargestellte Steuereinheit 4 auch eine schematisch dargestellte, reversible, elektrische Maschine 6 zum Betreiben in einem Rekuperationsbetrieb ansteuerbar. Im Rekuperationsbetrieb wird durch die reversible elektrische Maschine 6 kinetische Energie in elektrische Energie umgewandelt.

Die Bremsvorrichtung 2 umfasst eine Bremsscheibe 8, die an einem Rad des Fahrzeugs festgelegt ist. Mit dem Rad ist die Bremsscheibe 8 um eine Drehachse 10 drehbar. Die Bremsscheibe 8 umfasst eine verschleißunterliegende Reibschicht 12, welche eine Bremsfläche 14 bildet.

Darüber hinaus umfasst die Bremsvorrichtung 2 ein Bremsmittel 16, das beim Bremsen im Bremsenbetrieb berührend und Verschleiß erzeugend an der Bremsfläche 14 der Bremsscheibe 8 anliegt.

Darüber hinaus umfasst das Fahrzeug ein optisches Sensormittel 18, das der Steuereinheit 4 funktional zugeordnet ist. Das Sensormittel 18 ist bei dem in Figur 1 gezeigten Ausführungsbeispiel an einem Halter des Bremsmittels 16 festgelegt. Bei dem in Figur 2 gezeigten Ausführungsbeispiel ist das Sensormittel 18 an einem Spurhebel eines Radträgers 20 angeordnet. Durch das optische Sensormittel 18 ist eine Korrosion der Bremsfläche 14 optisch erfassbar.

Bei dem in den Figuren 1 und 2 gezeigten Ausführungsbeispielen umfasst das Sensormittel 18 jeweils einen optischen Sensor, insbesondere eine Kamera.

Anhand des schematischen Ablaufdiagramms gemäß Figur 2 wird im Folgenden, unter Zuhilfenahme der Darstellung gemäß der Figuren 1 und 2, das erfindungsgemäße Verfahren beschrieben:
In einem ersten Schritt 100 wird durch die Steuereinheit 4 mittels des optischen Sensormittels 18 der Korrosionsgrad der Bremsfläche 14 der Bremsscheibe 8 erfasst. Dieses kann beim Schritt 100 fortwährend, also ständig, oder in periodischen Intervallen, also nach bestimmten Zeitabläufen und/oder beim Ansteuern eines Bremsenbetriebs durch die Steuereinheit 4 erfolgen.

Wenn durch das optische Sensormittel 18 im Schritt 100 erfasst wird, dass ein in der Steuereinheit 4 hinterlegter bestimmter Korrosionsgrad der Bremsfläche 14 erreicht oder überschritten ist, wird eine Reinigung der Bremsscheibe 8 veranlasst.

Hierzu kann die Bremsscheibe 8 in einem Schritt 101a dadurch gereinigt werden, dass beim Bremsen des Fahrzeugs die Bremsvorrichtung 2 durch die Steuereinheit 4 zum zumindest anteiligen Betreiben im Bremsenbetrieb angesteuert wird. Dieses bedeutet, dass beim Bremsen des Fahrzeugs das Fahrzeug nicht ausschließlich durch die reversible elektrische Maschine 6 im Rekuperationsbetrieb abgebremst wird, sondern zumindest auch anteilig durch die Bremsvorrichtung 2 im Bremsenbetrieb.

Alternativ hierzu kann in einem Schritt 101b das Fahrzeug ausschließlich durch die Bremsvorrichtung 2 im Bremsenbetrieb gebremst werden.

Die Schritte 101a sowie 101b können solange durchgeführt werden, bis durch die Steuereinheit 4, insbesondere durch Erfassen des Korrosionsgrads der Bremsfläche 14 durch das optische Sensormittel 18 erfasst wird, dass die Korrosion der Bremsfläche 14 den bestimmten Korrosionsgrad unterschreitet. Wird ein Unterschreiten des bestimmten Korrosionsgrads der Bremsfläche 14 erfasst, kann das Fahrzeug in den Schritt 100 zurückkehren und ausschließlich oder anteilig im Rekuperationsbetrieb betrieben werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Bremsvorrichtung
- 4: Steuereinheit
- 6: elektrische Maschine
- 8: Bremsscheibe
- 10: Drehachse
- 12: Reibschicht
- 14: Bremsfläche
- 16: Bremsmittel
- 18: Sensormittel
- 20: Radträger

- 100-101b: Verfahrensschritte

## Patentansprüche

1. Verfahren zum Reinigen einer Bremsscheibe (8) eines Hybrid- oder vollelektrischen Fahrzeugs mit einer Steuereinheit (4), mit einer reversiblen elektrischen Maschine (6), die zum Bremsen des Fahrzeugs durch die Steuereinheit (4) zum Betreiben in einem Rekuperationsbetrieb ansteuerbar ist, bei dem kinetische Energie in elektrische Energie umgewandelt wird, mit mindestens einer mechanischen Bremsvorrichtung (2), die zum Bremsen des Fahrzeugs durch die Steuereinheit (4) zum Betreiben in einem Bremsenbetrieb ansteuerbar ist, wobei die Bremsvorrichtung (2) mindestens eine Bremsscheibe (8), die an einem Rad des Fahrzeugs drehfest festlegbar ist, und die mindestens eine Verschleiß unterliegende Reibschicht (12) aufweist, welche eine Bremsfläche (14) bildet, und wobei die Bremsvorrichtung (2) mindestens ein Bremsmittel (16) umfasst, das beim Bremsen berührend und Verschleiß erzeugend an der Bremsfläche (14) der Bremsscheibe (8) anliegt, wobei zumindest bei Erfassen eines Erreichens oder Überschreitens eines in der Steuereinheit (4) hinterlegten bestimmten Korrosionsgrads der Bremsfläche (14) das Fahrzeug beim Bremsen durch die Steuereinheit (4) zum zumindest anteiligen Betreiben im Bremsenbetrieb angesteuert wird, und **dadurch gekennzeichnet, dass** der Steuereinheit mindestens einen optischen Sensormittel (18) zugeordnet ist, das in oder an der Bremsvorrichtung (2) angeordnet ist und durch das eine Korrosion der Bremsfläche (4) optisch erfassbar ist.

2. Verfahren nach Anspruch 1, **dadurch gekennzeichnet, dass** bei Erfassen des Erreichens oder Überschreitens des bestimmten Korrosionsgrads der Bremsfläche (14) das Fahrzeug beim Bremsen durch die Steuereinheit (4) zum ausschließlichen Betreiben im Bremsenbetrieb angesteuert wird.

3. Verfahren nach Anspruch 1 oder 2, **dadurch gekennzeichnet, dass** das Fahrzeug an mindestens zwei Rädern jeweils eine Bremsvorrichtung (2) und jeweils mindestens ein der Steuereinheit (4) zugeordnetes optisches Sensormittel (18) umfasst, wobei bei Erfassen des Erreichens oder Überschreitens des bestimmten Korrosionsgrads der Bremsfläche (14) der Bremsscheibe (8) mindestens einer der Bremsvorrichtung (2) alle Bremsvorrichtungen (2) durch die Steuereinheit (4) zum Betreiben im Bremsenbetrieb angesteuert werden oder wobei bei Erfassen des Erreichens oder Überschreitens des bestimmten Korrosionsgrads der Bremsfläche (14) der Bremsscheibe (8) einer der Bremsvorrichtung (2) durch die Steuereinheit (4) nur die mindestens eine Bremsvorrichtung (2) mit erfassten erreichten oder überschrittenen bestimmten Korrosionsgrad zum Betreiben im Bremsenbetrieb angesteuert wird.

4. Verfahren nach einem der vorhergehenden Ansprüche, **dadurch gekennzeichnet, dass** bei Erfassen eines Unterschreitens des bestimmten Korrosionsgrads der Bremsfläche (14) das Fahrzeug beim Bremsen durch die Steuereinheit (4) zum zumindest anteiligen Betreiben im Rekuperationsbetrieb oder zum ausschließlichen Betreiben im Rekuperationsbetrieb angesteuert wird.

5. Verfahren nach einem der vorhergehenden Ansprüche, **dadurch gekennzeichnet, dass** der Korrosionsgrad der Bremsfläche (14) durch das optische Sensormittel (18) durchgehend bei Betrieb des Fahrzeugs, periodisch in Zeitintervallen und/oder beim Bremsen des Fahrzeugs im Bremsenbetrieb erfasst wird.

6. Verfahren nach einem der vorhergehenden Ansprüche, **dadurch gekennzeichnet, dass** das optische Sensormittel (18) mindestens einen Lichtempfänger, wie Kamera, Glanzmessgerät, lichtempfindlichen Widerstand oder Photodiode, umfasst, wobei das Erfassen des Korrosionsgrads das Erfassen mindestens einer Intensität und/oder einer Wellenlänge der mindestens einen von der Bremsfläche (14) reflektierten elektromagnetischen Welle, insbesondere beim Bremsenbetrieb, umfasst, insbesondere einen Intensitäts- und/oder Wellenlängenbereich, und wobei das Erreichen oder Überschreiten des bestimmten Korrosionsgrads der Bremsfläche (14) ein Erreichen oder Unterschreiten einer bestimmten Intensität und/oder Wellenlänge und/oder eines bestimmten Intensitäts- und/oder Wellenlängenbereichs umfasst.

7. Verfahren nach Anspruch 6, **dadurch gekennzeichnet, dass** das optische Sensormittel (18) mindestens einen Lichtsender umfasst, wobei das Erfassen des Korrosionsgrads das Erfassen mindestens einer Intensität oder Wellenlänge der mindestens einen von der Bremsfläche (14) reflektierten elektromagnetischen Welle der durch den Lichtsender ausgestrahlten mindestens einen elektromagnetischen Welle umfasst.

8. Verfahren nach einem der vorhergehenden Ansprüche, **dadurch gekennzeichnet, dass** die Steuereinheit (4) mindestens ein Speichermittel umfasst, in dem jeder Intensität oder Wellenlänge und/oder jedem bestimmten Intensitäts- oder Wellenlängenbereich ein Korrosionsgrad der Bremsfläche (14) zuordenbar oder zugeordnet und hinterlegbar oder hinterlegt ist.

9. Verfahren nach einem der Ansprüche 6 bis 8, **dadurch gekennzeichnet, dass** die bestimmte Intensität oder Wellenlänge und/oder der bestimmte Intensitäts- oder Wellenlängenbereich durch Messen einer den bestimmten Korrosionsgrad umfassenden Bremsfläche (14) einer Eich-Bremsscheibe (8) auf einem Prüfstand durch das optische Sensormittel (18) erfasst und in der Steuereinheit (4) hinterlegt wird.

10. Hybrid- oder vollelektrischen Fahrzeug, das nach einem Verfahren der Ansprüche 1 bis 9 betreibbar ist, mit einer Steuereinheit (4), mit einer reversiblen elektrischen Maschine (6), die zum Bremsen des Fahrzeugs durch die Steuereinheit (4) zum Betreiben in einem Rekuperationsbetrieb ansteuerbar ist, bei dem kinetische Energie in elektrische Energie umgewandelt wird, mit mindestens einer mechanischen Bremsvorrichtung (2), die zum Bremsen des Fahrzeugs durch die Steuereinheit (4) zum Betreiben in einem Bremsenbetrieb ansteuerbar ist, wobei die Bremsvorrichtung (2) mindestens eine Bremsscheibe (8), die an einem Rad des Fahrzeugs drehfest festlegbar ist, und die mindestens eine Verschleiß unterliegende Reibschicht (12) aufweist, welche eine Bremsfläche (14) bildet, und wobei die Bremsvorrichtung (2) mindestens ein Bremsmittel (16) umfasst, das beim Bremsen berührend und Verschleiß erzeugend an der Bremsfläche (14) der Bremsscheibe (8) anliegt, und **dadurch gekennzeichnet**, mit mindestens einem der Steuereinheit (4) zugeordneten optischen Sensormittel (18), das in oder an der Bremsvorrichtung (2) angeordnet ist und durch das eine Korrosion der Bremsfläche (14) optisch erfassbar ist.

11. Fahrzeug nach Anspruch 10, **dadurch gekennzeichnet, dass** das optische Sensormittel (18) mindestens einen Lichtempfänger, wie Kamera, Glanzmessgerät, lichtempfindlichen Widerstand oder Fotodiode, umfasst.

12. Fahrzeug nach Anspruch 11, **dadurch gekennzeichnet, dass** das optische Sensormittel (18) mindestens einen Lichtsender umfasst, durch den elektromagnetischen Wellen in Richtung Bremsfläche (14) der Bremsscheibe (8) ausstrahlbar sind und durch Reflexion an der Bremsfläche (14) der Bremsscheibe (8) durch den Lichtempfänger empfangbar sind.

13. Fahrzeug nach einem der Ansprüche 10 bis 12, **dadurch gekennzeichnet, dass** mindestens eines des mindestens einen optischen Sensormittels (18) an einem Halter des Bremsmittels (16), wie Bremssattel, und/oder an einem Radträger (20), insbesondere einem Spurhebel des Radträgers (20), festlegbar oder festgelegt ist.

14. Fahrzeug nach einem der Ansprüche 10 bis 13, **gekennzeichnet, durch** mindestens zwei Räder, mindestens zwei Sensormittel (18) und durch mindestens zwei Bremsvorrichtungen (2), wobei jedem der mindestens zwei Räder ein Sensormittel (18) und eine Bremsvorrichtung (2) zugeordnet ist.

15. Fahrzeug nach Anspruch 14, **dadurch gekennzeichnet, dass** die mindestens zwei Bremsvorrichtungen (2) gemeinsam und abhängig oder einzeln und unabhängig voneinander durch die Steuereinheit (4) zum Betätigen ansteuerbar sind.

## Claims

1. Method for cleaning a brake disc (8) of a hybrid or fully electric vehicle comprising a control unit (4), a reversible electric machine (6) which can be controlled by the control unit (4) to operate in a recuperation mode for braking the vehicle, in which kinetic energy is converted into electrical energy, and at least one mechanical braking device (2) which can be controlled by the control unit (4) to operate in a braking mode for braking the vehicle, wherein the braking device (2) comprises at least one brake disc (8) which can be fixed to a wheel of the vehicle in a rotationally fixed manner and which has at least one friction layer (12) subject to wear, which forms a braking surface (14), and wherein the braking device (2) comprises at least one braking medium (16) which, during braking, makes contact with and causes wear on the braking surface. (14) of the brake disc (8), wherein, at least when the control unit (4) detects that a certain degree of corrosion of the brake surface (14) has been reached or exceeded, the control unit (4) controls the vehicle to operate at least partially in braking mode during braking, and **characterized in that** the control unit is assigned at least one optical sensor (18) which is arranged in or on the brake device (2) and by which corrosion of the brake surface (4) can be optically detected.

2. Method according to claim 1, **characterized in that**, when the control unit (4) detects that the certain degree of corrosion of the brake surface (14) has been reached or exceeded, the vehicle is controlled to operate exclusively in braking mode during braking.

3. A method according to claim 1 or 2, **characterized in that** the vehicle comprises a brake device (2) and at least one optical sensor (18) assigned to the control unit (4) at at least two wheels, wherein, upon detection of reaching or exceeding a specific degree of corrosion of the braking surface (14) of the brake disc (8), at least one of the brake devices (2) is activated by the control unit (4) for operation in braking mode, or wherein, upon detection of reaching or exceeding a specific degree of corrosion of the braking surface (14) of the brake disc (8) in one of the brake devices (2), only the at least one brake device (2) with the detected, reached, or exceeded specific degree of corrosion is activated for operation in braking mode by the control unit (4).

4. A method according to any of the preceding claims, **characterized in that**, upon detection of a corrosion level below a specified threshold on the brake surface (14), the control unit (4) directs the vehicle to operate at least partially in recuperation mode or exclusively in recuperation mode during braking.

5. A method according to any of the preceding claims, **characterized in that** the corrosion level of the brake surface (14) is continuously detected by the optical sensor (18) during vehicle operation, periodically at time intervals, and/or during braking.

6. A method according to any of the preceding claims, **characterized in that** the optical sensor means (18) comprises at least one light receiver, such as a camera, gloss meter, photosensitive resistor, or photodiode, wherein the detection of the degree of corrosion comprises the detection of at least one intensity and/or one wavelength of the at least one electromagnetic wave reflected by the braking surface (14), particularly during braking operation, and wherein reaching or exceeding the specified degree of corrosion of the braking surface (14) comprises reaching or falling below a specified intensity and/or wavelength and/or a specified intensity and/or wavelength range.

7. A method according to claim 6, **characterized in that** the optical sensor means (18) comprises at least one light emitter, wherein the detection of the degree of corrosion comprises the detection of at least one intensity or wavelength of the at least one electromagnetic wave reflected by the braking surface (14) and the at least one electromagnetic wave emitted by the light emitter.

8. A method according to any of the preceding claims, **characterized in that** the control unit (4) comprises at least one storage means in which a degree of corrosion of the braking surface (14) can be assigned or stored for each intensity or wavelength and/or each specific intensity or wavelength range.

9. A method according to any one of claims 6 to 8, **characterized in that** the specified intensity or wavelength and/or the specified intensity or wavelength range is detected by measuring a braking surface (14) of a calibration brake disc (8) comprising the specified degree of corrosion on a test bench using the optical sensor means (18) and stored in the control unit (4).

10. Hybrid or fully electric vehicle, which can be operated according to a method of claims 1 to 9, comprising a control unit (4), a reversible electric machine (6) which can be controlled by the control unit (4) to operate in a recuperation mode for braking the vehicle, in which kinetic energy is converted into electrical energy, and at least one mechanical braking device (2) which can be controlled by the control unit (4) to operate in a braking mode for braking the vehicle, wherein the braking device (2) comprises at least one brake disc (8) which can be fixed non-rotatably to a wheel of the vehicle and which has at least one friction layer (12) subject to wear, which forms a braking surface (14), and wherein the braking device (2) comprises at least one braking medium (16) which, during braking, makes contact with and causes wear on the braking surface (14) of the brake disc (8), and thereby **characterized in that** the optical sensor means (18) is arranged in or on the brake device (2) and is associated with at least one optical sensor means (18) assigned to the control unit (4), and is optically detectable by means of corrosion of the braking surface (14).

11. Vehicle according to claim 10, **characterized in that** the optical sensor means (18) comprises at least one light receiver, such as a camera, gloss meter, light-sensitive resistor, or photodiode.

12. Vehicle according to claim 11, **characterized in that** the optical sensor means (18) comprises at least one light emitter by which electromagnetic waves can be emitted in the direction of the braking surface (14) of the brake disc (8) and can be received by the light receiver by reflection at the braking surface (14) of the brake disc (8).

13. Vehicle according to any one of claims 10 to 12, **characterized in that** at least one of the at least one optical sensor means (18) is attachable to or attached to a holder of the brake means (16), such as a brake caliper, and/or to a wheel carrier (20), in particular a track rod of the wheel carrier (20).

14. Vehicle according to any one of claims 10 to 13, **characterized by** at least two wheels, at least two sensor means (18), and at least two brake devices (2), wherein each of the at least two wheels is assigned a sensor means (18) and a brake device (2).

15. Vehicle according to claim 14, **characterized in that** the at least two brake devices (2) can be actuated jointly and dependently or individually and independently of one another by the control unit (4).

## Revendications

1. Procédé de nettoyage d'un disque de frein (8) d'un véhicule hybride ou entièrement électrique, comprenant une unité de commande (4), une machine électrique réversible (6) pouvant être commandée par l'unité de commande (4) pour fonctionner en mode de récupération d'énergie lors du freinage du véhicule (l'énergie cinétique étant convertie en énergie électrique), et au moins un dispositif de freinage mécanique (2) pouvant être commandé par l'unité de commande (4) pour fonctionner en mode de freinage du véhicule. Ce dispositif de freinage (2) comprend au moins un disque de frein (8) pouvant être fixé à une roue du véhicule de manière à être solidaire en rotation et comportant au moins une couche de friction (12) sujette à l'usure, formant une surface de freinage (14). Le dispositif de freinage (2) comprend également au moins un fluide de freinage (16) qui, lors du freinage, entre en contact avec la surface de freinage et provoque son usure. (14) du disque de frein (8), dans lequel, au moins lorsque l'unité de commande (4) détecte qu'un certain degré de corrosion de la surface de frein (14) a été atteint ou dépassé, elle commande le véhicule pour qu'il fonctionne au moins partiellement en mode freinage pendant le freinage. Cette unité de commande est **caractérisée en ce qu'**elle est équipée d'au moins un capteur optique (18) disposé dans ou sur le dispositif de freinage (2) et permettant la détection optique de la corrosion de la surface de frein (4).

2. Procédé selon la revendication 1, **caractérisé en ce que**, lorsque l'unité de commande (4) détecte qu'un certain degré de corrosion de la surface de frein (14) a été atteint ou dépassé, le véhicule est commandé pour qu'il fonctionne exclusivement en mode freinage pendant le freinage.

3. Procédé selon la revendication 1 ou 2, **caractérisé en ce que** le véhicule comprend un dispositif de freinage (2) et au moins un capteur optique (18) affecté à l'unité de commande (4) sur au moins deux roues. Lors de la détection d'un degré de corrosion atteint ou dépassé sur la surface de freinage (14) du disque de frein (8), au moins un des dispositifs de freinage (2) est activé par l'unité de commande (4) en mode freinage. Ou bien, lors de la détection d'un degré de corrosion atteint ou dépassé sur la surface de freinage (14) du disque de frein (8) dans l'un des dispositifs de freinage (2), seul le ou les dispositifs de freinage (2) présentant le degré de corrosion atteint ou dépassé sont activés en mode freinage par l'unité de commande (4).

4. Procédé selon l'une quelconque des revendications précédentes, **caractérisé en ce que**, lors de la détection d'un niveau de corrosion inférieur à un seuil spécifié sur la surface de freinage (14), l'unité de commande (4) ordonne au véhicule de fonctionner au moins partiellement en mode de récupération d'énergie ou exclusivement en mode de récupération d'énergie pendant le freinage.

5. Procédé selon l'une quelconque des revendications précédentes, **caractérisé en ce que** le niveau de corrosion de la surface de freinage (14) est détecté en continu par le capteur optique (18) pendant le fonctionnement du véhicule, périodiquement à intervalles réguliers, et/ou pendant le freinage.

6. Procédé selon l'une quelconque des revendications précédentes, **caractérisé en ce que** le capteur optique (18) comprend au moins un récepteur de lumière, tel qu'une caméra, un brillancemètre, une photorésistance ou une photodiode, la détection du degré de corrosion consistant à détecter au moins une intensité et/ou une longueur d'onde de l'onde électromagnétique réfléchie par la surface de freinage (14), notamment pendant le freinage, et le fait d'atteindre ou de dépasser le degré de corrosion spécifié de la surface de freinage (14) consistant à atteindre ou à rester en dessous d'une intensité et/ou d'une longueur d'onde spécifiée et/ou d'une plage d'intensité et/ou de longueur d'onde spécifiée.

7. Procédé selon la revendication 6, **caractérisé en ce que** le capteur optique (18) comprend au moins un émetteur de lumière, la détection du degré de corrosion consistant à détecter au moins une intensité ou longueur d'onde de l'onde électromagnétique réfléchie par la surface de freinage (14) et de l'onde électromagnétique émise par l'émetteur de lumière.

8. Procédé selon l'une quelconque des revendications précédentes, **caractérisé en ce que** l'unité de commande (4) comprend au moins un moyen de stockage permettant d'attribuer ou de stocker un degré de corrosion de la surface de freinage (14) pour chaque intensité ou longueur d'onde et/ou chaque plage d'intensité ou de longueur d'onde spécifique.

9. Procédé selon l'une quelconque des revendications 6 à 8, **caractérisé en ce que** l'intensité ou la longueur d'onde spécifiée et/ou la plage d'intensité ou de longueur d'onde spécifiée sont détectées par la mesure d'une surface de freinage (14) d'un disque de frein d'étalonnage (8) présentant le degré de corrosion spécifié, sur un banc d'essai, à l'aide du capteur optique (18), et stockées dans l'unité de commande (4).

10. Véhicule hybride ou entièrement électrique, pouvant être utilisé selon un procédé décrit dans les revendications 1 à 9, comprenant une unité de commande (4), une machine électrique réversible (6) pouvant être commandée par l'unité de commande (4) pour fonctionner en mode de récupération d'énergie lors du freinage du véhicule (l'énergie cinétique étant convertie en énergie électrique), et au moins un dispositif de freinage mécanique (2) pouvant être commandé par l'unité de commande (4) pour fonctionner en mode de freinage du véhicule. Ce dispositif de freinage (2) comprend au moins un disque de frein (8) pouvant être fixé de manière non rotative à une roue du véhicule et comportant au moins une couche de friction (12) sujette à l'usure, formant une surface de freinage (14). Le dispositif de freinage (2) comprend également au moins un fluide de freinage (16) qui, lors du freinage, entre en contact avec la surface de freinage (14) du disque de frein (8) et provoque son usure. Ce dispositif est **caractérisé en ce que** le capteur optique (18) est disposé dans ou sur le dispositif de freinage (2) et est associé à au moins un autre capteur optique. (18) affecté à l'unité de commande (4) et détectable optiquement par corrosion de la surface de freinage (14).

11. Véhicule selon la revendication 10, **caractérisé en ce que** le capteur optique (18) comprend au moins un récepteur de lumière, tel qu'une caméra, un brillancemètre, une photorésistance ou une photodiode.

12. Véhicule selon la revendication 11, **caractérisé en ce que** le capteur optique (18) comprend au moins un émetteur de lumière permettant d'émettre des ondes électromagnétiques en direction de la surface de freinage (14) du disque de frein (8) et de les recevoir par réflexion sur cette surface.

13. Véhicule selon l'une quelconque des revendications 10 à 12, **caractérisé en ce qu'**au moins un des capteurs optiques (18) est fixé à un support de dispositif de freinage (16), tel qu'un étrier de frein, et/ou à un porte-roue (20), notamment à une biellette de direction de ce porte-roue (20).

14. Véhicule selon l'une quelconque des revendications 10 à 13, **caractérisé par** au moins deux roues, au moins deux capteurs (18) et au moins deux dispositifs de freinage (2), chaque roue étant équipée d'un capteur (18) et d'un dispositif de freinage (2).

15. Véhicule selon la revendication 14, **caractérisé en ce que** les deux dispositifs de freinage (2) peuvent être actionnés conjointement et de manière dépendante ou individuellement et indépendamment l'un de l'autre par l'unité de commande (4).
